# EUROPÄISCHE PATENTSCHRIFT

(11) **EP 0 415 300 B1**
(45) Veröffentlichungstag und Bekanntmachung des Hinweises auf die Patenterteilung: **20.08.1997**
(21) Anmeldenummer: 90116332.9
(22) Anmeldetag: 27.08.1990
(51) Int. Cl.: F01K 23/10

(54) **Erzeugung von Dampf und Strom für den Anfahrbetrieb eines Dampfkraftwerkes**
Steam and electricity production for the start of a power plant
Production de vapeur et d'électricité pour le démarrage d'une centrale thermique

(30) Priorität: 31.08.1989 DE 3928771
(43) Veröffentlichungstag der Anmeldung: 06.03.1991
(73) Patentinhaber: Asea Brown Boveri Aktiengesellschaft, 68309 Mannheim (DE)
(72) Erfinder: Häuser, Ulrich, Dr., D-6806 Viernheim (DE)
(74) Vertreter: Rupprecht, Klaus, Dipl.-Ing.

(56) Entgegenhaltungen:
- GB-A- 2 084 260
- GB-A- 2 166 198
- US-A- 3 879 616
- PATENT ABSTRACTS OF JAPAN vol. 10, no. 37 (M-453)(2094) 14 Februar 1986, & JP-
- A-60 190607 (HITACHI) 28 September 1985,
- PATENT ABSTRACTS OF JAPAN vol. 7, no. 124 (M-218)(1269) 28 Mai 1983, & JP-A-58 41208 (TOKYO SHIBAURA DENKI) 10 März 1983,
- PATENT ABSTRACTS OF JAPAN vol. 8, no. 174 (M-316)(1611) 10 August 1984, & JP-A- 59 68503 (HITACHI) 18 April 1984,
- PATENT ABSTRACTS OF JAPAN vol. 12, no. 160 (M-697)(3007) 14 Mai 1988, & JP-A-62 279209 (KAWASAKI STEEL CORP.) 04 Dezember 1987,
- PATENT ABSTRACTS OF JAPAN vol. 11, no. 199 (M-602)(2646) 26 Juni 1987, & JP-A- 62 23506 (TOSHIBA) 31 Januar 1987,

## Beschreibung

Die Erfindung betrifft die Erzeugung von Dampf und Strom für den Anfahr betrieb eines Dampfkraftwerkes mit wenigstens einer Gasturbine und einem Hilfsdampferzeuger sowie mit einem von der Gasturbine beaufschlagten Generator zur Stromerzeugung sowie eine Einrichtung zur Durchführung des Verfahrens.

Eine solche Einrichtung und ein solches Verfahren sind aus der Specification des Kraftwerkes Touss Power Station, Iran, August 1978 bekannt.

Das Anfahren von Dampfkraftwerken, die im allgemeinen mit Dampfturbinen versehen sind, erfolgt üblicherweise unter Verwendung von Dampf, der mittels eines eigens hierfür vorgesehenen Anfahrheizkessels, im weiteren Anfahrdampferzeuger genannt, mit separater Befeuerung bereitgestellt wird.

Die beim Anfahren benötigte elektrische Energie wird dabei in einem Stromgenerator erzeugt, der von einer Gasturbine beaufschlagt ist und gemeinsam mit dieser eine separate Einheit bildet, die beim Normalbetrieb des Kraftwerks außer Betrieb gesetzt ist.

Nachteilig bei dieser allgemein bekannten Schaltungsanordnung der Kraftwerkskomponenten ist der Umstand, daß der Anfahrdampferzeuger und die Gasturbine zum Betrieb des Anfahrstromgenerators jeweils separat befeuert werden. Dies verursacht einen zusätzlichen Aufwand, da beide Komponenten jeweils separate Versorgungs- und Steuerungssysteme erforderlich machen, um den störungsfreien Betrieb jederzeit zu gewährleisten.

Von besonderem Nachteil hierbei ist die Tatsache, daß die von der Gasturbine freigesetzte Abwärme bei der Erzeugung des Hilfsstroms ungenutzt an die Umgebung freigesetzt wird und hierdurch einerseits das Umgebungsklima beeinträchtigt und andererseits den Wirkungsgrad des Kraftwerks verschlechtert.

Hiervon ausgehend ist es Aufgabe der Erfindung, ein Verfahren der eingangs genannten Art anzugeben, das die vorgenannten Nachteile vermeidet, sowie eine Einrichtung zu schaffen, mit der das erfindungsgemäße Verfahren durchführbar ist.

Diese Aufgabe wird in Verbindung mit den Merkmalen des Oberbegriffes erfindungsgemäß durch die im kennzeichen der Ansprüche 1 respektive 5 angegebenen Merkmale gelöst.

Insbesondere ist gemäß der Erfindung vorgesehen, daß der mittels der Abwärme der Gasturbine im Anfahrdampferzeuger erzeugte Dampf als Anfahrdampf benutzt wird, um das Dampfkraftwerk in Betrieb zu setzen.

Gemäß einer Ausgestaltung der Erfindung kann vorgesehen sein, daß der von der Abwärme der Gasturbine beaufschlagte Anfahrdampferzeuger zusätzlich befeuert wird, um so die für den Anfahrbetrieb erforderliche Dampfmenge bereitzustellen. Dies kann insbesondere dann zum Tragen kommen, wenn die Leistung der zum Antrieb des Stromgenerators erforderlichen Gasturbine vergleichsweise klein ist, so daß ihre Abgaswärme nicht zur Erzeugung der erforderlichen Anfahrdampfmenge ausreicht.

Gemäß der Erfindung ist der Anfahrdampfkessel als Abhitzekessel für das Abgas der Gasturbine ausgelegt, so daß die erforderlichen Dampftemperaturen erreicht werden. Dabei kann der Anfahrdampfkessel für Naturumlauf oder Zwangsumlauf ausgebildet sein, so daß die benötigte Dampfmenge sowohl als Sattdampf als auch als überhitzter Dampf bereitgestellt werden kann.

Gemäß dem erfindungsgemäßen Verfahren bzw. mit der erfindungsgemäßen Einrichtung verbindet sich der Vorteil, daß hierdurch der etwa zeitgleich entstehende Bedarf an Anfahrstrom und Anfahrdampf sich aus ökonomischer und ökologischer Sicht auf bestmögliche Weise decken läßt.

Der eingesetzte Brennstoff wird besser genutzt und durch die einfache technische Ausführung des Anfahrdampfkessels als Abhitzekessel können die Investitionsaufwendungen beträchtlich vermindert werden.

Ein weiterer Vorteil besteht darin, daß Abhitzekessel der zuvor behandelten Größe sowohl von der Auslegung her und der konstruktiven Gestaltung her als auch von der Fertigung und Montage kostengünstig bereitgestellt werden können.

Diese und weitere vorteilhafte Ausgestaltungen der Erfindung sind in den Patentansprüchen angegeben.

Anhand von in der Zeichnung dargestellten Schaltschemata sollen die Erfindung, vorteilhafte Ausgestaltungen und besondere Vorteile der Erfindung näher erläutert und beschrieben werden.

Es zeigen:
- Figur 1: ein erstes Schaltschema mit ausschließlicher Beheizung durch den Abgasstrom,
- Figur 2: ein zweites Schaltschema mit zusätzlicher Beheizung.

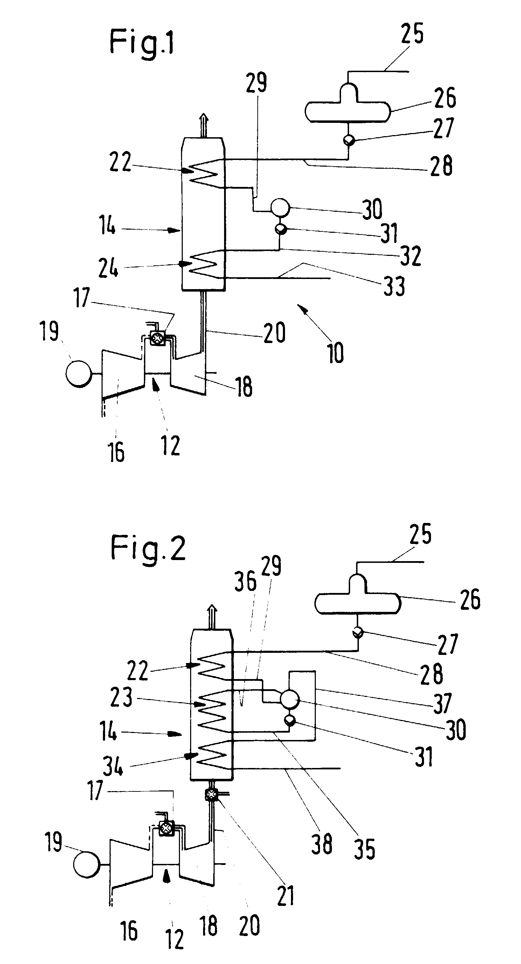

In Figur 1 ist ein Anfahrsystem 10 eines nicht näher dargestellten Dampfkraftwerkes gezeigt, das eine Gasturbogruppe 12 sowie einen mit der Abgas seite der Gasturbogruppe 12 verbundenen als Anfahrdampferzeuger 14 ausgebildeten Heizkessel aufweist. Die Gasturbogruppe 12 besteht aus einem Verdichter 16, einer Brennkammer 17 und einer Gasturbine 18, wobei der Verdichter 16 und die Gasturbine 18 einwellig sowohl miteinander als auch mit einem Generator 19 zur Stromerzeugung verbunden sind.

Die Funktion der Gasturbogruppe 12 und des Generators 19 erfolgt in allbekannter Weise, so daß sich weitere Ausführungen hierzu erübrigen.

Das Abgasseite der Gasturbine 18 ist über eine Leitung 20 mit dem Dampferzeuger 14 verbunden und beaufschlagt diesen mit der aus dem Abgas austretenden Abwärme.

Der Dampferzeuger 14 weist eine Vorwärmstufe 22 sowie eine Verdampfungsstufe 24 auf. Dabei ist vorgesehen, daß in der Vorwärmstufe 22 Kondensat vorgewärmt wird, welches aus dem nicht näher dagestellten Hauptkreislauf des Dampfkraftwerkes über eine Leitung 25 in einen Kondensatsammelbehälter 26 zuströmt, von wo es mittels einer Kondensatpumpe 27 über eine Leitung 28 in die Vorwärmstufe 22 gelangt und nach erfolgter Erwärmung über eine Leitung 29 in einen Mischsammler 30. Dem Mischsammler 30 nachgeschaltet ist eine Speisepumpe 31, die das vorgewärmte Kondensat über eine Leitung 32 der Verdampfungsstufe 24 zuführt.

Der in der Verdampfungsstufe 24 erzeugte Dampf steht über eine Leitung 33 zum Anfahren im Kraftwerk zur Verfügung.

Bei einem aus mehreren Kraftwerkseinheiten bestehenden Dampfkraftwerk ist es vorteilhaft, den auf die zuvor beschriebene Weise erzeugten Anfahrdampf auf eine sog. Hilfsdampfschiene zu führen, von wo aus die einzelnen Bedarfsstellen versorgt werden können.

In Figur 2 ist ein weitgehend mit dem in Figur 1 gezeigten Schaltschema übereinstimmendes zweites Schaltschema dargestellt, das sich lediglich in zwei Merkmalen unterscheidet. Hierauf soll im folgenden besonders eingegangen werden, während die übrigen, bereits aus Figur 1 bekannten Merkmale mit den gleichen Bezugsziffern bezeichnet werden.

Der wesentliche Unterschied zwischen beiden Schaltschemata besteht darin, daß im Schaltschema gemäß Figur 2 eine zusätzliche Beheizung des Dampferzeugers 14 vorgesehen ist, bei der in die Verbindungsleitung 20 zwischen der Abgas seite der Gasturbine 18 und dem Dampferzeuger 14 eine Brennkammer 21 zwischengeschaltet ist, welche das zuströmende Abgas mit weiterer Wärmezufuhr überlagert. Hierdurch wird die Verdampfungsleistung des Dampferzeugers 14 wesentlich gesteigert, so daß es möglich ist, neben einer erhöhten Dampfmenge auch höhere Dampftemperaturen zu erzielen. Hierzu ist in dem Dampferzeuger 14 zur Erzeugung von Sattdampf eine Verdampfungsstufe 23 angeordnet, welche einen Kreislauf bildet mit dem Mischsammler 30.

Das in dem Mischsammler 30 einströmende vorgewärmte Kondensat wird von der Speisepumpe 31 über eine Leitung 35 in die Sattdampfstufe 23 gefördert, wo es bei Sattdampftemperatur verdampft wird und über die Leitung 36 in den Mischsammler 30 zurückströmt.

An den Mischsammler 30 schließt eine Dampfleitung 37 an, durch welche der Sattdampf zu einer Überhitzungsstufe 34 gelangt, in der der Sattdampf überhitzt wird. Von dort wird der überhitzte Dampf über eine Dampfleitung 38, wie zuvor bei Figur 1 entsprechend Leitung 33 zu den jeweiligen Bedarfsstellen geleitet.

Entsprechend den zuvor beschriebenen Schaltschemata, bietet das erfindungsgemäße Verfahren die Möglichkeit, den Anfahrvorgang eines Dampfkraftwerkes auf besonders wirtschaftliche Weise durchzuführen, wobei mit vergleichsweise geringem Energieaufwand ein Höchstmaß an Nutzen erzielbar ist.

## Patentansprüche

1. Verfahren zur Erzeugung von Dampf und elektrischem Strom für den Anfahrbetrieb eines Dampfkraftwerkes mit wenigstens einer Anfahrgasturbine sowie mit einem von der Anfahrgasturbine angetriebenen Generator zur Stromerzeugung und mit einem Anfahrdampferzeuger, der mit aus dem Hauptkreislauf des Dampfkraftwerkes entnommenen Kondensat gespeist wird, wobei Gasturbine und Generator eine separate Einheit bilden, die beim Normalbetrieb des Kraftwerkes außer Betrieb gesetzt ist, dadurch gekennzeichnet, daß das Abgas der Anfahrgasturbine (18) dem Anfahrdampferzeuger (14) zugeführt wird und mit der Abwärme im Abgasstrom die Beheizung des Anfahrdampferzeugers (14) erfolgt.

2. Verfahren nach Anspruch 1, dadurch gekennzeichnet, daß dem Abgasstrom der Anfahrgasturbine (18) eine weitere Wärmequelle (21) überlagert wird, so daß eine zusätzliche Beheizung des Anfahrdampferzeugers (14) erfolgt, um eine erhöhte Sattdampfmenge zu erzeugen oder um die erforderliche Menge an überhitztem Dampf bereitzustellen.

3. Verfahren nach Anspruch 1 oder 2, dadurch gekennzeichnet, daß das zu verdampfende Kondensat im Anfahrdampferzeuger (14) in einer Vorwärmstufe (22) vorgewärmt wird, bevor es zur Verdampfung gebracht wird, wobei die Vorwärmstufe (22) ebenfalls vom Abgasstrom der Anfahrgasturbine (18) beheizt wird.

4. Verfahren nach Anspruch 3, dadurch gekennzeichnet, daß das vorgewärmte Kondensat zunächst einem Mischsammler (30) und von dort einer Sattdampfstufe (23) des Anfahrdampferzeugers (14) zugeführt wird, daß der so erzeugte Sattdampf ebenfalls in den Mischsammler (30) geleitet wird und durch Weiterleitung von dort in eine Überhitzungsstufe (24) in überhitzten Dampf umgewandelt wird.

5. Einrichtung zur Durchführung des Verfahrens nach einem der Ansprüche 1 bis 4, mit einem Anfahrdampferzeuger (14), mit einer aus einem Verdichter (16), einer Brennkammer (17) und einer Anfahrgasturbine (18) gebildeten Gasturbogruppe (12) zum Antrieb eines Generators (19) zur Stromerzeugung, wobei Gasturbine und Generator eine separate Einheit bilden, die beim Normalbetrieb des Kraftwerkes außer Betrieb gesetzt ist, dadurch gekennzeichnet, daß die Abgasseite der Anfahrgasturbine (18) mit dem Anfahrdampferzeuger (14) verbunden ist und diesen zwecks Beheizung mit der Abgaswärme beaufschlagt.

6. Einrichtung nach Anspruch 5, dadurch gekennzeichnet, daß eine weitere Wärmequelle (21), insbesondere eine Brennkammer, vorgesehen ist zur Beheizung des Anfahrdampferzeugers (14), die sich der Beheizung durch den Abgasstrom der Gasturbine (18) überlagert.

7. Einrichtung nach Anspruch 6, dadurch gekennzeichnet, daß die weitere Wärmequelle (21) in die Verbindung (20) zwischen Abgasseite der Gasturbine (18) und dem Anfahrdampferzeuger (14) zwischengeschaltet ist.

## Claims

1. Process for generating steam and electric power for the start-up operation of a steam power station, having at least one start-up gas turbine and a generator, driven by the start-up gas turbine, for generating power and having a start-up steam generator, which is fed by condensate taken from the main circulation of the steam power station, gas turbine and generator forming a separate unit which is put out of operation during normal operation of the power station, characterized in that the exit gas from the start-up gas turbine (18) is fed to the start-up steam generator (14) and heating of the start-up steam generator (14) is effected by the waste heat in the exit gas stream.

2. Process according to Claim 1, characterized in that a further heat source (21) is superposed upon the exit gas stream from the start-up gas turbine (18), so that additional heating of the start-up steam generator (14) takes place, in order to generate an increased rate of saturated steam or to provide the required rate of superheated steam.

3. Process according to Claim 1 or 2, characterized in that the condensate which is to be vaporised is preheated in the start-up steam generator (14) in a preheating stage (22) before it is caused to vaporise, the preheating stage (22) also being heated by the exit gas stream from the start-up gas turbine (18).

4. Process according to Claim 3, characterized in that the preheated condensate is first fed to a mixing header (30) and from there to a saturated steam stage (23) of the start-up steam generator (14), and that the saturated steam thus generated is also passed into the mixing header (30) and, by passing it on from there into a superheating stage (24), is converted into superheated steam.

5. Equipment for carrying out the process according to one of Claims 1 to 4, having a start-up steam generator (14) and a gas turbo set (12), formed by a compressor (16), a combustion chamber (17) and a start-up gas turbine (18), for driving a generator (19) for power generation, gas turbine and generator forming a separate unit which is put out of operation during normal operation of the power station, characterized in that the exit gas side of the start-up gas turbine (18) is connected to the start-up steam generator (14) and subjects the latter to the exit gas heat for the purpose of heating.

6. Equipment according to Claim 5, characterized in that a further heat source (21), in particular a combustion chamber, is provided for heating the start-up steam generator (14) superposed upon the heating by the exit gas stream from the gas turbine (18).

7. Equipment according to Claim 6, characterized in that the further heat source (21) is inserted into the connection (20) between the exit gas side of the gas turbine (18) and the start-up steam generator (14).

## Revendications

1. Procédé de production de vapeur et de courant électrique pour le démarrage d'une centrale thermique à vapeur, comportant au moins une turbine à gaz de démarrage et un générateur entraîné par la turbine à gaz pour produire du courant électrique, ainsi qu'un générateur de vapeur de démarrage qui est alimenté en condensat provenant du circuit principal de la centrale thermique à vapeur, la turbine à gaz et le générateur formant une unité distincte qui, lors du fonctionnement normal de la centrale, est arrêtée, caractérisé par le fait que l'on fait passer les gaz d'échappement de la turbine à gaz (18) de démarrage dans le générateur de vapeur de démarrage (14) et que l'on chauffe le générateur de vapeur de démarrage (14) à l'aide de la chaleur perdue contenue dans les gaz d'échappement.

2. Procédé selon la revendication 1, caractérisé par le fait que l'on superpose au flux de gaz d'échappement de la turbine à gaz (18) de démarrage une source de chaleur (21) supplémentaire, de telle sorte que le générateur de vapeur de démarrage (14) est soumis à un réchauffage supplémentaire aux fins de produire une quantité plus importante de vapeur saturée ou bien aux fins de préparer la quantité nécessaire de vapeur surchauffée.

3. Procédé selon la revendication 1 ou 2, caractérisé par le fait que l'on préchauffe le condensat à vaporiser dans un étage de préchauffage (22) avant que ledit condensat ne soit vaporisé, l'étage de préchauffage (22) étant également chauffé par le flux de gaz d'échappement de la trubine à gaz (18).

4. Procédé selon la revendication 3, caractérisé par le fait que le condensat préchauffé est d'abord envoyé dans un collecteur mélangeur (30) et de là dans un étage (23) de production de vapeur saturée du générateur dc vapeur de démarrage (14), par le fait que l'on envoie également la vapeur ainsi produite dans le collecteur mélangeur (30) et que par transfert dans un étage surchauffeur (24) on transforme ladite vapeur en vapeur surchauffée.

5. Dispositif pour la mise en oeuvre du procédé selon les revendications 1 à 4 comportant un générateur de vapeur de démarrage (14), un groupe turbine à gaz (12) formé d'un compresseur (16), d'une chambre de combustion (17) et d'une turbine à gaz de démarrage (18) pour l'entraînement d'un générateur (19) pour la production de courant électrique, la turbine à gaz et le générateur formant une unité distincte qui, lors du fonctionnement normal de la centrale, est arrêtée, caractérisé par le fait le côté échappement de la turbine à gaz de démarrage (18) est connecté à un générateur de vapeur (14) et alimente ce dernier avec de la chaleur perdue à des fins de chauffage.

6. Dispositif selon la revendication 5, caractérisé par le fait qu'il est prévu, pour le chauffage du générateur de vapeur de démarrage (14), une source de chaleur (21) supplémentaire, notamment une chambre de combustion, qui se superpose au chauffage par le flux de gaz d'échappement de la turbine à gaz (18).

7. Dispositif selon la revendication 6, caractérisé par le fait que la source de chaleur (21) supplémentaire est insérée dans la liaison (20) entre le côté échappement de la turbine à gaz (18) et le générateur de vapeur de démarrage (14).
